**Europäisches Patentamt**

**European Patent Office**

**Office européen des brevets**

(11) Veröffentlichungsnummer: **0 399 045**
**A1**

(12) **EUROPÄISCHE PATENTANMELDUNG**
**veröffentlicht nach Art. 158 Abs. 3**
**EPÜ**

(21) Anmeldenummer: **89901919.4**

(22) Anmeldetag: **28.10.88**

(86) Internationale Anmeldenummer:
**PCT/SU88/00216**

(87) Internationale Veröffentlichungsnummer:
**WO 90/04879 (03.05.90 90/10)**

(51) Int. Cl.⁵: **H02K 44/02**

(43) Veröffentlichungstag der Anmeldung:
**28.11.90 Patentblatt 90/48**

(84) Benannte Vertragsstaaten:
**AT BE CH DE FR GB IT LI LU NL SE**

(71) Anmelder: **VSESOJUZNY NAUCHNO-ISSLEDOVATELSKY PROEKTNO-KONSTRUKTORSKY I TEKHNOLOGICHESKY INST. ELEKTROSVAROCHNOGO OBORUDOVANIA (VNIIESO)**
**ul. Litovskaja, 10**
**Leningrad, 194100(SU)**

(72) Erfinder: **BYKHOVSKY, David Grigorievich**
**ul. Esenina, 32-2-95**
**Leningrad, 194358(SU)**
Erfinder: **PANOV, Alexandr Nikolaevich**
**naberezhnaya Fontanki, 26-3**
**Leningrad, 191028(SU)**

(74) Vertreter: **Finck, Dieter et al**
**Patentanwälte v. Füner, Ebbinghaus, Finck**
**Mariahilfplatz 2 & 3**
**D-8000 München 90(DE)**

(54) **PUMPANORDNUNG FÜR GESCHMOLZENE METALLE AUS EINEM BEHÄLTER.**

(57) Die Vorrichtung zum Umpumpen von Metallschmelze aus einem Behälter (1) enthält eine MHD-Konduktionskreiselpumpe, die als zwei Scheiben (5, 6) ausgebildet ist, die Permanentmagnete darstellen und parallel zueinander mit einem Spalt gelagert sind. Die Erzeugenden der Scheiben (5, 6) sind durch eine zylindrische Hülse (7) begrenzt. Die Innenflächen der Scheiben (5, 6), die unterschiedliche Polarität haben, und die zylindrische Hülse (7) bilden eine Arbeitskammer (8), die über eine Öffnung (9) in der Scheibe (5) mit der Metallschmelze im Behälter (1) und über eine Öffnung (10) in der zylindrischen Hülse (7) mit einem Stutzen (3) zur Ableitung der Metallschmelze verbunden ist.

Die Metallflächen der Scheiben (5, 6) und die Aussenfläche des Stutzens (3), die mit der Metallschmelze in Berührung stehen, weisen elektrischisolierende überzüge auf.

Die Erfindung ist in der metallurgischen Industrie zum Umpumpen von Metallen anwendbar, die eine Schmelztemperatur haben, die den Curie-Punkt des Magnetwerkstoffes unterschreitet, aus welchem die Magnetelemente der MHD-Pumpe hergestellt sind.

FIG. 1

# VORRICHTUNG ZUM UMPUMPEN VON METALLSCHMELZE AUS EINEM BEHÄLTER

## Technisches Gebiet

Die vorliegende Erfindung bezieht sich auf das Gebiet der Metallurgie und betrifft insbesondere Vorrichtungen zum Umpumpen von Metallschmelze aus einem Behälter.

## Zugrundeliegender Stand der Technik

Es ist eine Vorrichtung zum Umpumpen von Metallschmelze bekannt, die eine in einem Behälter mit Metallschmelze aufnehmbare MHD-Konduktionskreiselpumpe enthält (SU, A, 679 783).

Die MHD-Pumpe enthält ein keramisches Gehäuse mit Doppelwänden, zwischen welchen ein Solenoid untergebracht ist. Der zylindrische Gehäuse innenraum ist in einen oberen und einen unteren Teil durch eine querangeordnete Trennwand unterteilt. In der Trennwand ist eine in der Achse des Gehäuses angeordnete Öffnung ausgebildet. Vom Behälter wird die Metallschmelze über den unteren Teil des Gehäuseinnenraumes und die Öffnung in der Trennwand der Arbeitskammer zugeführt.

Im oberen Teil des Innenraumes ist eine Graphitelektrode mit einer keramischen Spitze montiert. Die Arbeitskammer der Vorrichtung ist durch die keramische Spitze der Graphitelektrode und die querangeordnete Trennwand gebildet. Das Metall wird über einen Stutzen zur Ableitung der Metallschmelze abgegossen.

Die Vorrichtung enthält auch zwei Gleichstrom-Speisequellen, deren eine den elektrischen Stromfluss durch die in der Arbeitskammer befindliche Metallschmelze und die zweite den Stromdurchgang durch das Solenoid ermöglicht.

- 2 -

Der Stand der Metallschmelze im Behälter wird so eingestellt, dass bei abgeschalteten Speisequellen die Arbeitskammer mit Metall gefüllt ist. Der Graphitelektrode der MHD-Pumpe und einer im Behälter angeordneten Zusatzelektrode wird von der Gleichstrom- Speisequelle eine Spannung zugeführt, um den Strom durch die Arbeitskammer durchzuleiten. Dem Solenoid wird auch die Spannung von seinem eigenen Gleichstrom-Speisequelle zugeführt. Dabei entsteht in der Arbeitskammer ein Magnetfeld, dessen Induktionsvektor entlang der Längsachse der Arbeitskammer gerichtet ist. Der Gleichstrom, der durch die in der Arbeitskammer befindliche Metallschmelze durchfliesst, wirkt mit dem durch das Solenoid erzeugten Magnetfeld zusammen und bringt das Metall in Rotation. Dadurch entsteht ein Druckgefälle zwischen der mittigen Eintrittsöffnung und dem Stutzen zum Austritt der Metallschmelze, und das Metall gelangt in den Stutzen zum Austritt der Metallschmelze.

Die bekannte Vorrichtung hat jedoch eine komplizierte Konstruktion und beträchtliche Abmessungen, die durch die Notwendigkeit bedingt sind, ein Magnetsystem aufzubauen, welches das Solenoid enthält, das mittels des doppelwandigen Gehäuses vor der Metallschmelze geschützt ist.

Offenbarung der Erfindung

Der Erfindung liegt die Aufgabe zugrunde, eine Vorrichtung zum Umpumpen von Metallschmelze aus einem Behälter zu schaffen, bei welcher die bauliche Gestaltung von MHD-Konduktionskreiselpumpe und Magnetsystem eine vereinfachte Konstruktion der Vorrichtung ermöglicht, ihre Abmessungen verringert und das elektrische Schema zu ihrer Speisung vereinfacht.

Die gestellte Aufgabe wird dadurch gelöst, dass bei einer Vorrichtung zum Umpumpen von Metallschmelze aus einem Behälter, die eine MHD-Konduktionskreiselpumpe, deren Arbeitskammer mit dem eine Metallschmelze enthaltenden Behälter sowie mit einem Stutzen zur Ableitung der Metallschmelze verbunden ist, und eine Gleichstromquelle umfasst, deren einer Anschluss mit dem Stutzen zur Ableitung der Metallschmelze und der andere mit der Metallschmelze im Behälter verbunden ist, erfindungsgemäss die MHD-Konduktionskreiselpumpe als zwei Scheiben ausgebildet ist, die Permanentmagnete darstellen, welche parallel zueinander und mit einem Spalt gelagert sind, während die Erzeugenden der Scheiben durch eine zylindtische Hülse begranzt sind und der Raum zwischen den Innenflächen der Scheiben und der Innenfläche der zylindrischen Hülse die Arbeitskammer bildet, die über eine in einer der Scheiben hergestellte Öffnung mit dem die Metallschmelze enthaltenden Behälter und über eine in der zylindrischen Hülse hergestellte Öffnung mit dem Stutzen zur Ableitung der Metallschmelze verbunden ist, wobei die den Hohlraum der Arbeitskammer begranzenden Innenflächen der Scheiben unterschiedliche Polarität haben, während die Metallflächen der Scheiben und die Aussenfläche des Stutzens zur Ableitung der Metallschmelze, die mit der Metallschmelze in Berührung stehen, mit einer elektrisch isolierenden Schicht überzogen sind.

Zweckmässig ist, die zylindrische Hülse aus einem Werkstoff mit geringer Permeabilität herzustellen.

Diese Ausführung der MHD-Konduktionskreiselpumpe erlaubt es, die Funktionen der Arbeitskammer und des Magnetsystems zu vereinigen wodurch die Konstruktion der MHD-Pumpe und ihres Speisesystems, dass eine einzige Gleichstromquelle umfasst vereinfacht wird.

– 4 –

Kurze Beschreibung der Zeichnungen

Nachfolgend wird die Erfindung durch Ausführungsbeispiele mit Hinweisen auf beigelegte Zeichnungen näher erläutert, in welchen es zeigen:

Fig. 1 eine erfindungsgemässe Vorrichtung zum Umpumpen von Metallschmelze im Schnitt;

Fig. 2 eine Seitenansicht von Fig. 1.

Beste Ausführungsform der Erfindung

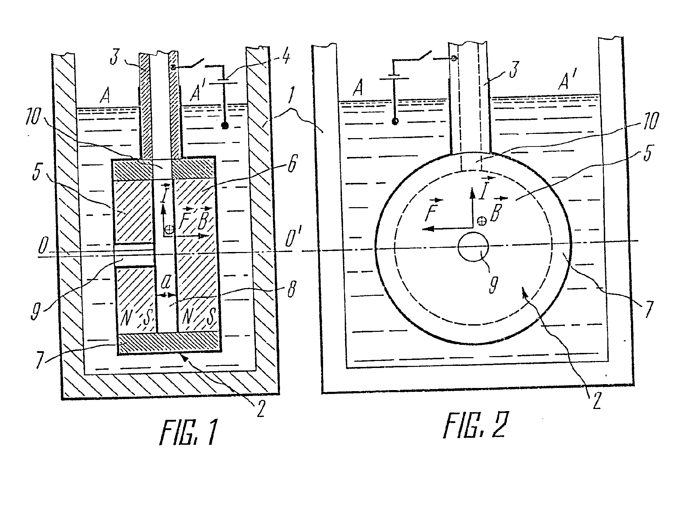

Die erfindungsgemässe Vorrichtung zum Umpumpen von Metallschmelze aus einem Behälter enthält eine in einem Behälter 1 mit Metallschmelze (Fig. 1, 2) aufgenommene MHD-Konduktionskreiselpumpe 2 mit einem Stutzen 3 zur Ableitung der Metallschmelze. Am Stutzen 3 zur Ableitung der Metallschmelze ist ein Pol einer Gleichstromquelle 4 angeschlossen, deren anderer Pol mit der Metallschmelze im Behälter 1 verbunden ist. Die MHD-Konduktionskreiselpumpe 2 ist als zwei parallel zueinander und mit einem Spalt "a" zwischen diesen gelagerte Scheiben 5 und 6 ausgebildet, während die Erzeugenden der Scheiben 5 und 6 durch eine zylindrische Hülse 7 begrenzt sind, die aus einem Werkstoff mit geringer Permeabilität hergestellt ist. Der Raum zwischen den Innenflächen der Scheiben 5 und 6 und der Innenfläche der zylindrischen Hülse 7 bildet eine Arbeitskammer 8, die über eine in der Scheibe 5 hergestellte Öffnung 9 mit dem die Metallschmelze enthaltenden Behälter 1 und über eine in der zylindrischen Hülse 7 hergestellte Öffnung 10 mit dem Stutzen 3 zum Austritt der Metallschmelze verbunden ist. Die Verbindung der Öffnung 10 und des Stutzens 3 zum Austritt der Metallschmelze ist hermetisch ausgeführt. Die Scheiben 5 und 6 sind Permanentmagnete, und die den Hohlraum der Arbeitskammer begrenzenden Innenflächen der Scheiben 5 und 6 sind mit Gegenpolen N und S einander zugewandt. Die Metall-

- 5 -

flächen der Scheiben 5 und 6 und die Aussenfläche des Stutzens 3 zur Ableitung der Metallschmelze, die mit der Metallschmelze in Berührung stehen, sind mit einer elektrisch isolierenden Schicht überzogen.

Die Vorrichtung zum Umpumpen von Metallschmelze funktioniert folgendermässen. Der Behälter 1 ist mit der Metallschmelze bis zur Höhe A - A' gefüllt, d.h. in der Metallschmelze befinden sich die MHD-Pumpe 2 und ein Teil des Stutzens 3 zur Ableitung der Metallschmelze, der unterhalb der Stelle liegt, wo der Pol der Speisequelle 4 an den Stutzen 3 angeschlossen ist. Bei der abgeschalteten Speisequelle 4 sind der Hohlraum der Atbeitskammer 8 und der Teil des Stutzens 3 bis zur Höhe A - A' auch mit der Metallschmelze gefüllt.

Bei Einschaltung der Gleichstromquelle 4 fliesst zwischen dem Behälter 1 mit der Metallschmelze und dem Stutzen 3 zur Ableitung der Metallschmelze der Betriebsstrom 1 (in Fig. 1, 2 mit Pfeilen angedeutet), der folgenderweise gerichtet ist: Metallschmelze im Behälter 1 - Metall in der Eintrittsöffnung 9 - Metall in der Arbeitskammer 8 - Stutzen 3 zur Ableitung der Metallschmelze. In der Arbeitskammer 8 fliesst der Betriebsstrom $\vec{I}$ in radialer Richtung. Diese Richtung des Betriebsstromes $\vec{I}$ wird durch den aufgetragenen elektrisch isolierenden Überzug erzielt. Ausserdem bilden die Scheiben 5 und 6, die Permanentmagnete darstellen, in der Arbeitskammer 8 ein homogenes Magnetfeld, dessen Induktionsvektor $\vec{B}$ entlang der Längsachse OO' der Arbeitskammer 8 gerichtet ist.

Die resultierende Kraft $\vec{F}$, die auf die Metallschmelze in der Arbeitskammer 8 wirkt, wenn in dieser der Strom $\vec{I}$ ($\vec{F} \sim [\vec{I} \times \vec{B}]$) fliesst, ist azimutal gerichtet und zwingt die Metallschmelze zur Rotation in der Arbeitskammer 8.

- 6 -

Dadurch entsteht zwischen der Öffnung 9 in der Arbeitskammer 8 und dem Stutzen 3 zur Ableitung der Metallschmelze ein Druckgefälle, unter dessen Wirkung das Umpumpen der Metallschmelze aus dem Behälter 1 über die Arbeitskammer 8 in den Stutzen 3 zur Ableitung der Metallschmelze beginnt.

Die erfindungsgemässe konstruktive Lösung gewährleistet optimale Bedingungen für die Erzeugung der auf die Metallschmelze wirkenden Kraft $\vec{F}$, weil die zylindrische Hülse 7 aus einem Werkstoff mit geringer Permeabilität hergestellt ist, wodurch das Shunten des Magnetstroms durch die zylindrische Hülse 7 verhindert wird, während die auf die mit der Metallschmelze in Berührung stehenden Metallflächen der Scheiben 5 und 6 und auf die Aussenfläche des Stutzens 3 zur Ableitung des Metallschmelze aufgetragenen elektrisch isolierenden überzuge den Durchflüss des gesamten Betriebsstroms $\vec{I}$ in der Metallschmelze in radialer Richtung senkrecht zur Längsachse der MHD-Pumpe 2 gewährleisten.

Diese Ausbildung der Vorrichtung zum Umpumpen von Metallschmelze erlaubt es, die Abmessungen der MHD-Pumpe praktisch durch die Abmessungen der Arbeitskammer zu begrenzen und somit die Abmessungen der ganzen Vorrichtung zu verringern.

Industrielle Anwendbarkeit

Die Erfindung ist in der metallurgischen Industrie anwendbar, um Metallschmelzen umzupumpen, die eine Schmelztemperatur aufweisen, die den Curie-Punkt des Magnetwerkstoffes unterschreitet, aus welchem die Magnetelemente der MHD-Pumpe hergestellt sind.

- 7 -

PATENTANSPRÜCHE

1. Vorrichtung zum Umpumpen von Metallschmelze aus einem Behälter (1), die eine MHD-Konduktionskreiselpumpe (2), deren Arbeitskammer mit dem eine Metallschmelze enthaltenden Behälter sowie mit einem Stutzen (3) zur Ableitung der Metallschmelze verbunden ist, und eine Gleichstromquelle umfasst, deren einer Anschluss mit dem Stutzen (3) zur Ableitung der Metallschmelze und der andere mit der Metallschmelze im Behälter (1) verbunden ist, dadurch  g e k e n n -  z e i c h n e t, dass die MHD-Konduktionskreiselpumpe (2) als zwei Scheiben (5, 6) ausgebildet ist, die Permanentmagnete darstellen, welche parallel zueinander und mit einem Spalt (a) gelagert wind, während die Erzeugenden der Scheiben (5, 6) durch eine zylindrische Hülse (7) begrenzt sind und der Raum zwischen den Innenflächen der Scheiben (5, 6) und der Innenfläche der zylindrischen Hülse (7) die Arbeitskammer (8) bildet, die über eine in einer der Scheiben (5) hergestellte Öffnung (9) mit dem die Metallschmelze enthaltenden Behälter (1) und über eine in der zylindrischen Hülse (7) hergestellte Öffnung (10) mit dem Stutzen (3) zur Ableitung der Metallschmelze verbunden ist, wobei die den Hohlraum der Arbeitskammer (8) begrenzenden Innenflächen der Scheiben (5, 6) unterschiedliche Polarität aufweisen, während die Metallflächen der Scheiben (5, 6) und die Aussenfläche des Stutzens (3) zur Ableitung der Metallschmelze, die mit der Metallschmelze in Berührung stehen, mit einer elektrisch isolierenden Schicht überzogen sind.

2. Vorrichtung zum Umpumpen von Metallschmelze nach Anspruch 1, dadurch  g e k e n n z e i c h n e t, dass die zylindrische Hülse (7) aus einem Werkstoff mit geringer Permeabilität hergestellt ist.

FIG. 1

FIG. 2

# INTERNATIONAL SEARCH REPORT

International Application No. PCT/SU 88/00216

## I. CLASSIFICATION OF SUBJECT MATTER (if several classification symbols apply, indicate all)

According to International Patent Classification (IPC) or to both National Classification and IPC

IPC 4: H 02 K 44/02

## II. FIELDS SEARCHED

### Minimum Documentation Searched

| Classification System | Classification Symbols |
|---|---|
| IPC 4: | H 02 K 44/02, F 27 D 3/15, B 22 D 11/10, H 02 K 44/04, 44/06 |

Documentation Searched other than Minimum Documentation
to the Extent that such Documents are Included in the Fields Searched

## III. DOCUMENTS CONSIDERED TO BE RELEVANT

| Category | Citation of Document, with indication, where appropriate, of the relevant passages | Relevant to Claim No. |
|---|---|---|
| A | SU, A1, 570173, (D.G. Bykhovsky), 12 October 1977 | 1 |
| A | SU, A1, 679783, (D.G. Bykhovsky et al.), 18 August 1979 (cited in the description) | 1 |
| A | SU, A1, 900781, (L.I. Charykov et al.), 23 March 1987 | 1 |
| A | FR, A1, 2572867, (CHARYKOV L.I. etc.), 09 May 1986 | 1 |
| | & GB, A, 2171261, 20.08.86 WO, A1, 86/01051, 13.02.86 | |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 22 June 1989 (22.06.89) | 24 July 1989 (24.07.89) |

| International Searching Authority | Signature of Authorized Officer |
|---|---|
| ISA/SU | |

Form PCT/ISA/210 (second sheet) (January 1985)